# EUROPÄISCHE PATENTSCHRIFT

(11) **EP 1 204 906 B1**
(45) Veröffentlichungstag und Bekanntmachung des Hinweises auf die Patenterteilung: **01.10.2003**
(21) Anmeldenummer: 00954509.6
(22) Anmeldetag: 14.07.2000
(51) Int. Cl.: G05D 23/19, F16K 31/02

(54) **VORRICHTUNG UND VERFAHREN ZUR GASDOSIERUNG**
GAS DOSING DEVICE AND METHOD
PROCEDE ET DISPOSITIF POUR DOSER DU GAZ

(30) Priorität: 09.08.1999 DE 19937603
(43) Veröffentlichungstag der Anmeldung: 15.05.2002
(73) Patentinhaber: Max-Planck-Gesellschaft zur Förderung der Wissenschaften e.V., 80539 München (DE)
(72) Erfinder: LAUCHE, Hans, D-37191 Katlenburg-Lindau (DE)
(74) Vertreter: Hertz, Oliver, Dr.
(86) Internationale Anmeldenummer: EP0006753
(87) Internationale Veröffentlichungsnummer: WO01011437

(56) Entgegenhaltungen:
- DE-A- 2 056 746
- DE-A- 4 308 297
- DE-C- 561 009
- FR-A- 2 500 565
- PATENT ABSTRACTS OF JAPAN vol. 007, no. 068 (M-201), 19. März 1983 (1983-03-19) & JP 57 208375 A (MATSUSHITA DENKI SANGYO KK), 21. Dezember 1982 (1982-12-21)

## Beschreibung

Die Erfindung betrifft eine Vorrichtung zur Dosierung von Gasströmen, insbesondere ein Dosierventil zur Steuerung von Gasströmen oder einen Druckreduzierer für Meßeinrichtungen zur Analyse gasförmiger Proben, und ein Dosierverfahren, das mit einer derartigen Vorrichtung implementiert wird. Die Erfindung betrifft auch neuartige Anwendungen eines Dosierventils zur Kalibrierung von Meßgeräten.

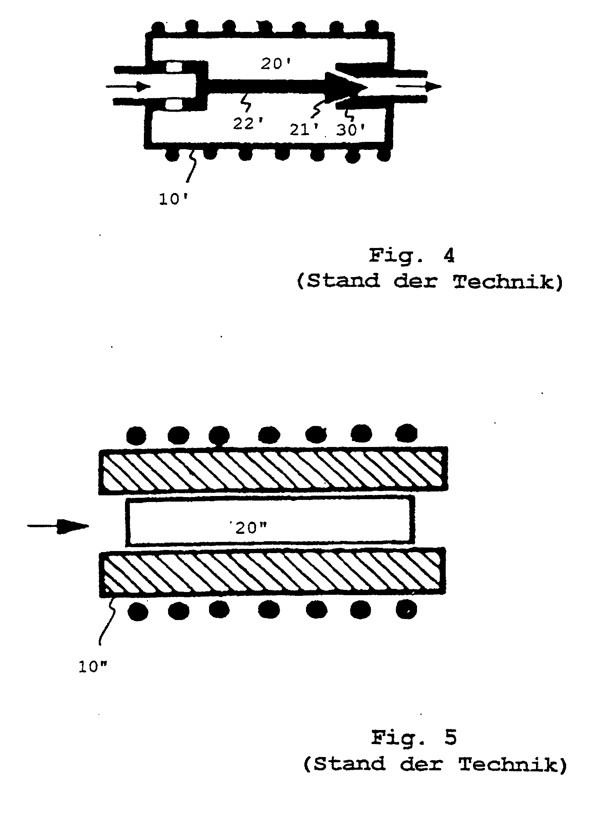

Aus den "Tabellen zur angewandten Physik" von M. v. Ardenne, Band II, Deutscher Verlag der Wissenschaften, Berlin 1973, Seite 179, Seite 469, sind verschiedene Arbeitsprinzipien elektrisch steuerbarer Dosierventile bekannt. Bei einer ersten Bauform, die in Figur 4 illustriert ist, sind in einem heizbaren Gehäuse 10' als Anpreßkörper 20' ein metallischer Kegel 21' an einer Halterung 22' und ein Ventilsitz 30' untergebracht. Das Gehäuse 10' und der Anpreßkörper 20' bestehen aus Materialien mit unterschiedlichen Wärmeausdehnungen, so daß durch geeignete Temperatureinstellung am Gehäuse 10' das Ventil geöffnet oder geschlossen werden kann. Diese Bauform besitzt die folgenden Nachteile. Die Konstruktion mit einem Kontakt zwischen dem metallischen Kegel 21' und dem Ventilsitz 30' neigt im Vakuum zur Kaltverschweißung, so daß sich das Dosierventil nach einiger Zeit nicht mehr öffnen läßt. Ein weiterer Nachteil besteht in der beschränkten Dichtheit des geschlossenen Ventils und Genauigkeit der Gasdosierung. Bei einer zweiten Bauform, die in Fig. 5 schematisch dargestellt ist, befindet sich in einem heizbaren Gehäuse 10" als Anpreßkörper ein Rundstab 20". Bei diesem Aufbau wird zur Gasdosierung die radiale differenzielle thermische Bewegung des Rundstabs 20" gegenüber dem Gehäuse 10" ausgenutzt. Ein wesentlicher Nachteil des Dosierventils gemäß Fig. 5 besteht darin, daß der Ventilsitz schon während der Fertigung nicht ausreichend kontrollierbar ist. Damit kann das herkömmliche Dosierventil nur geringen Dichtheitsanforderungen genügen. Beispielsweise wird keine Dichtheit gegenüber dem stark diffusionsfähigen Helium erreicht, das bei vielen Meßanwendungen als Trägergas eingesetzt wird. Bei einer bekannten, gegenüber Fig. 5 abgewandelten bauform, ist der Rundstab durch eine Kugel ersetzt, durch die zwar der Ventilsitz verbessert, eine Dichtheit für Helium jedoch nicht erzielt wird. Der Anpreßdruck des rohrförmigen Gehauses gegen den Rundstab oder die Kugel reicht nicht aus, um das Ventil sicher zu schließen.

Es besteht ein Interessean einer Vorrichtung zur Gasdosierung für Meß- und Analyseeinrichtungen. Beispielsweise ist für den Betrieb eines Gaschromatographen ein gleichmaßiger Trägergasfluß erforderlich. Als Trägergas wird z.B. Helium in einer Druckflasche bei einem Anfangsdruck von 200 bar zur Verfügung gestellt. Der Gaschromatograph benötigt jedoch lediglich einen Eingangsdruck von 1 bis 1,5 bar. Um diesen Druckunterschied zu überbrücken, benötigt man eine Dosier- oder Druckreduziervorrichtung. Die allgemein bekannten Druckregler für Schweißgase sind für eine derartige druckreduzierung in bezug auf ihre Genauigkeit und auch ihr Gewicht ungeeignet. Dies gilt insbesondere für Meßeinrichtungen, die unter Extrembedingungen eingesetzt werden sollen, z.B. für tragbare Gaschromatographen oder Gaschromatographen, die im Weltraum an Raumfahrzeugen eingesetzt werden sollen.

Eine weitere Aufgabenstellung, bei der ein Interesse an einer hochgenauen Gasdosierung besteht, ist die Kalibration von Massenspektrometern. Dabei wird eine Reduzierung des Gasdrucks bis in den Sub-mbar-Bereich gefordert.

Schließlich besteht auch im Bereich der Steuerungs- und Sicherheitstechnik ein besonders großes Interesse an temperaturabhängig schaltenden Gasventilen, die mit einer hohen Zuverlässigkeit arbeiten. Die oben erläuterten, herkömmlichen Bauformen thermisch betätigter Dosierventile sind als Steuerungs- oder Sicherheitselemente nicht einsetzbar.

Aus DE 20 56 746 ist ein temperaturgesteuertes Ventil bekannt, das ein Ventilgehäuse mit einem Strömungskanal und einen im Strömungskanal angeordneten Schließkörper umfasst.

Die Aufgabe der Erfindung besteht darin, eine verbesserte Vorrichtung zur Dosierung von Gasströmen anzugeben, die sich durch eine zuverlässige Funktion auch unter Vakuumbedingungen auszeichnen, eine extreme Dichtheit bis hin zur Helium-Leckdichte besitzt und auch zur Dosierung größerer Durchflußströme, bis in den ml/s-Bereich und darüber, geeignet ist. Die Aufgabe der Erfindung besteht auch in der Bereitstellung eines Dosierverfahrens unter Verwendung elektrisch oder thermisch betätigbarer und steuerbarer Dosierventile.

Diese Aufgaben werden durch ein Dosierventil und ein Verfahren mit den Merkmalen gemäß den Patentansprüchen 1 bzw. 10 gelöst. Vorteilhafte Ausführungsformen und Verwendungen der Erfindung ergeben sich aus den abhängigen Ansprüchen.

Gemäß einem ersten Gesichtspunkt der Erfindung wird ein Dosierventil beschrieben, bei dem in einem heizbaren Ventilgehäuse ein Anpreßkörper und ein Ventilsitz relativ zueinander beweglich angeordnet sind. Wie bei gattungsgemäßen Dosierventilen wird die Relativbewegung unter Ausnutzung der verschiedenen Wärmeausdehnungen von Ventilteilen vermittelt. Im Unterschied zu herkömmlichen Dosierventilen ist jedoch vorgesehen, den Ventilsitz am Ende eines geraden Stellrohres auszubilden, das mit seinem anderen Ende gasdicht am Ventilgehäuse befestigt ist und in dieses hin zu dem im Ventilgehäuse ortsfest angebrachten Anpreßkörper ragt. Der Anpreßkörper besitzt eine größere Härte als der Ventilsitz. Je nach der Temperatur des Ventils stellt sich die Position des Ventilsitzes relativ zum Anpreßkörper ein. Der Anpreßkörper, der vorzugsweise auf der hin zum Ventilsitz weisenden Seite eine kugelförmige Oberfläche besitzt, prägt bei der Erstmontage des Ventils seine Oberflächenform in den Ventilsitz ein. Da im weiteren Betriebsverlauf lediglich eine axiale Relativbewegung des Anpreßkörpers und des Ventilsitzes stattfindet, nicht jedoch eine radiale Bewegung, stellt diese erste Einprägung eine mit den herkömmlichen Dosierventilen unerreichbare Dichtheit sicher.

Gemäß einer bevorzugten Ausführungsform der Erfindung sind in einem rohrförmigen Ventilgehäuse zwei gerade Stellrohre untergebracht, die jeweils an einem Ende an den Enden des rohrförmigen Ventilgehäuses gasdicht befestigt sind und an den jeweils anderen Enden im Rohrinneren zwei Ventilsitze bilden. Zwischen den Ventilsitzen ist ein Anpreßkörper mit zwei Anpreßoberflächen im rohrförmigen Ventilgehäuse in Preßpassung angeordnet. Wiederum besitzt der Anpreßkörper eine größere Härte als die Ventilsitze an den inneren Enden der Stellrohre. Die Stellrohre besitzen eine geringere Wärmeausdehnung als das rohrförmige Ventilgehäuse. Je nach der mit einer am Ventilgehäuse angebrachten Heizeinrichtung eingestellten Temperatur des Dosierventils ist der Abstand der Ventilsitze vom Anpreßkörper von einem gasdicht geschlossenen zu einem geöffneten Betriebszustand stufenlos verstellbar. Der symmetrische Ventilaufbau mit zwei Ventilsitzen, die zum Verschließen des Ventils von zwei Seiten gegen den Anpreßkörper gedrückt werden, besitzt den Vorteil einer erhöhten Betriebssicherheit.

Gemäß einem weiteren Gesichtspunkt der Erfindung wird ein Verfahren zur Gasdosierung mit einer thermisch betätigten, auf dem Wärmeausdehnungsprinzip basierenden Dosiervorrichtung beschrieben. Gemäß einer ersten Ausführungsform des Verfahrens erfolgt die Betätigung der Dosiervorrichtung durch eine Ventilheizung mit einer elektrischen Widerstandsheizung, wobei der elektrische Widerstand der Widerstandsheizung als unmittelbarer Parameter für die Ventiltemperatur bzw. die Ventilstellung verwendet wird. Die Ventilheizung enthält vorzugsweise ein Widerstandsmaterial mit einem hohen thermischen Widerstandskoeffizienten, wie z.B. Nickel. Gemäß einer weiteren Ausführungsform erfolgt die Betätigung der Dosierungsvorrichtung, indem diese in Wärmekontakt mit einer temperaturveränderlichen Umgebung steht, wobei bei Temperaturerhöhung oder -erniedrigung der Umgebung jeweils entsprechend die Dosiervorrichtung geöffnet oder geschlossen wird.

Die Erfindung besitzt die folgenden Vorteile. Durch das Anpressen eines nicht-metallischen, harten Anpreßkörpers gegen einen relativ weicheren metallischen Ventilsitz wird, wie bei einer frischen Dichtung eines Wasserhahns, ein zuverlässiges Verschließen des Ventils sichergestellt. Ein Kaltverschweißen zwischen dem Anpreßkörper und dem Ventilsitz ist ausgeschlossen. Damit wird eine hohe Betriebszuverlässigkeit des Dosierventils erzielt. Das Öffnen des erfindungsgemäßen Dosierventils erfolgt durch ein Aufheizen, bis sich zwischen dem Anpreßkörper und dem Ventilsitz ein Spalt bildet. Bei den dabei eingestellten Temperaturen kann sich das für den metallischen Ventilsitz verwendete Material (z.B. Gold) entspannen und erweichen. Damit ist ausgeschlossen, daß der Ventilsitz im Lauf des Betriebes spröde wird. Alle Komponenten des erfindungsgemäßen Dosiserventils sind in bezug auf das Ventilgehäuse durch Preßpassung oder Verschweißen ortsfest angebracht. Es gibt keine losen Teile. Das erfindungsgemäße Dosierventil besitzt einen einfachen Aufbau, der mit an sich verfügbaren Mitteln einfach und sauber herstellbar ist. Die Ventilkomponenten sind somit nach der Herstellung unmittelbar sauber und können ohne Nachreinigung für die jeweilige Anwendung eingesetzt werden.

Weitere Vorteile und Einzelheiten der Erfindung werden aus den beigefügten Zeichnungen ersichtlich. Es zeigen:
- Fig. 1:: eine schematische Schnittansicht eines erfindungsgemäßen Dosierventils,
- Fig. 2:: eine vergrößerte Schnittansicht des Anpreßkörpers entlang der Linie A-A' in Fig. 1,
- Fig. 3:: schematische Illustrationen bevorzugter Anwendungen der Erfindung,
- Fig. 4:: eine erste Bauform eines herkömmlichen Dosierventils (Stand der Technik), und
- Fig. 5:: eine weitere Bauform eines herkömmlichen Dosierventils (Stand der Technik).

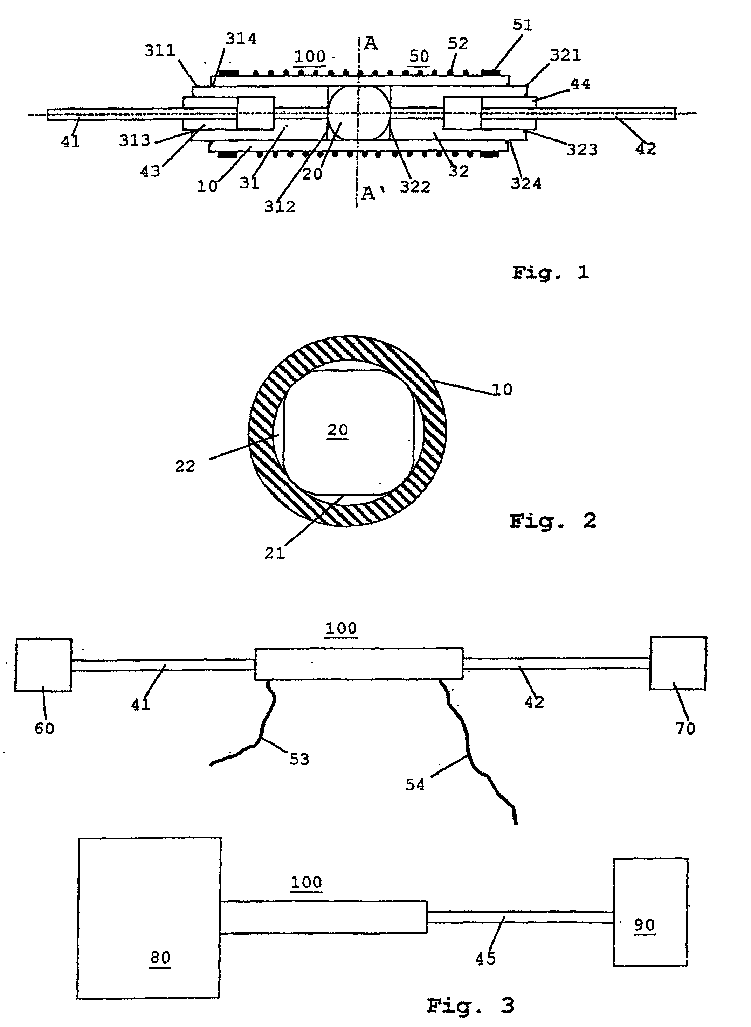

Fig. 1 zeigt eine schematische Schnittansicht einer bevorzugten Ausführungsform der Erfindung, bei der ein Anpreßkörper und zwei Ventilsitze in einem rohrförmigen, heizbaren Ventilgehäuse untergebracht sind. Die unten erläuterten Funktionsprinzipien sind jedoch in entsprechender Weise mit anderen Geometrien, insbesondere mit anderen Gehäuseformen und unter Kombination eines Anpreßkörpers und eines Ventilsitzes, realisierbar. Bei abgewandelten Gehäuseformen sind im Ventilgehäuse ggf. zusätzlich eine Halterung für den Anpreßkörper und/oder eine Führung für das Stellrohr mit dem Ventilsitz vorgesehen.

Das Dosierventil 100 gemäß Fig. 1 besitzt einen rotations- und spiegelsymmetrischen Aufbau. Die Axialsymmetrie bezieht sich auf die Anordnung des Gehäuses 10 mit dem Anpreßkörper 20 und den Stellrohren 31, 32 relativ zu der durch die gerade Ausrichtung der Anschlußleitungen 41, 42 gebildeten Bezugslinie. Die Spiegelsymmetrie des Ventils bezieht sich auf eine Bezugsebene durch die Linie A-A' senkrecht zur Zeichenebene. Die Spiegelsymmetrie ist kein zwingendes Merkmal der Erfindung.

Im rohrförmigen Ventilgehäuse 10 sind die Stellrohre 31, 32 untergebracht. Das Material des Ventilgehäuses 10, z.B. Edelstahl, besitzt eine größere Wärmeausdehnung als das Material der Stellrohre 31, 32, die beispielsweise aus einer Nickel-Eisen-Legierung gebildet sind. Jedes Stellrohr bildet an einem ersten Ende 311 bzw. 321 eine Aufnahme für die zugehörige Anschlußleitung 41 bzw. 42 bzw. die zugehörigen Stützrohre 43, 44. Das zweite Ende der Stellrohre 31, 32 bildet jeweils einen Ventilsitz 312 bzw. 322. Die Ventilsitze 312, 322 sind ebene Flächen, die eine Beschichtung mit einem Metall, z.B. Gold, tragen, dessen Härte geringer als die Härte des Anpreßkörpers 20 ist. Die durch die Stellrohre 31, 32 gebildeten Stempel besitzen jeweils eine innere, vom ersten zum zweiten Ende führende Bohrung, deren Durchmesser anwendungsabhängig gewählt ist. Der Innendurchmesser ist am ersten Ende an den Außendurchmesser der Stützrohre 43, 44 und am zweiten Ende anwendungsabhängig an die zu dosierenden Gasmengen angepaßt.

Die Stellrohre 31, 32 sind mit den ersten Enden 311 bzw. 321 an den Enden des Ventilgehäuses 10 befestigt. Die Verbindung zwischen den Rohrenden erfolgt durch Laserschweißen entlang der radial umlaufenden Verbindungslinien 314 bzw. 324. Enlang der Verbindungslinien 314, 324 ist eine gasdichte, geschlossene Verbindung zwischen den Stellrohren und dem Ventilgehäuse gegeben. Des weiteren sind die Stützrohre 43, 44 entlang der radial umlaufenden Verbindungslinien 313, 323 mit den Stellrohren 31, 32 verschweißt. Die Stützrohre 43, 44 besitzen die Aufgabe, die beim Laserschweißen dieser Verbindungslinien entstehenden Wärme aufzunehmen und damit die dünnwandigen Anschlußleitungen 41, 42 vor übermäßigen Wärmeinwirkungen zu schützen. Die Stützrohre 43, 44 können weggelassen werden, falls die Anschlußleitungen 41, 42 so bemessen sind, daß durch ein direktes Verschweißen mit den Stellrohren 31, 32 keine Schäden entstehen.

Der Anpreßkörper 20 ist ein aus einem kugelförmigen Grundkörper ausgeschnittener Formkörper in Gestalt eines in axialer Ventilrichtung ausgerichteten Zylinders mit abgerundeten Stirnflächen und mindestens einer abgeflacht geschnittenen Seitenflächen 21. Es sind vorzugsweise vier symmetrisch angeordnete ebene Seitenflächen 21 vorgesehen. Die Stirnflächen, die den Betriebszustand zu den Ventilsitzen 312, 322 hinweisen, entsprechen der Oberfläche des kugelförmigen Grundkörpers. Der Querschnitt des angeschnittenen Zylinderkörpers entlang der Linie A-A' ist in Fig. 2 gezeigt. Der Außendurchmesser des Zylinders ist geringfügig größer als der Innendurchmesser des Ventilgehäuses 10, so daß der Anpreßkörper 20 mit Preßpassung im Ventilgehäuse 10 festsitzt. Durch die geschnittenen Seitenflächen 21 werden gegenüber dem Ventilgehäuse 10 Gasdurchlaßkanäle 22 freigelassen, die in jedem Betriebszustand des Ventils durchlässig sind. Der Anpreßkörper 20 besteht aus einem im Vergleich zu den Ventilsitzen härteren Material, vorzugsweise aus einem Material mit einer Mohs'schen Härte von rund 8 bis 9. Es wird ein Anpreßkörper aus kristallinem Saphir bevorzugt, da Saphir die nötige Härte aufweist und darüber hinaus optisch transparent ist, so daß leicht visuell geprüft werden kann, ob der Anpreßkörper Fehler aufweist. Alternativ könnte der Anpreßkörper auch aus amorphem Material, z.B. aus SiC, hergestellt sein.

Wenn der Anpreßkörper 20 aus kristallinem Saphir besteht, so wird er vorzugsweise so geformt und im Ventil angeordnet, daß die Hauptachse des Saphirkristalls mit der Ventilachse zusammenfällt. Durch diese Orientierung werden ggf. störende Inhomogenitäten bei der Anpreßkörperverformung bei Temperaturänderung vermieden.

Das Bezugszeichen 50 bezeichnet eine elektrische Widerstandsheizung, die auf der äußeren Oberfläche des Ventilgehäuses 10 angeordnet ist. Die Widerstandsheizung 50 besteht aus zwei an den Enden des Ventilgehauses 10 aufglasierten, vom Ventilgehäuse elektrisch isolierten Kontaktringen 51, zwischen denen eine Widerstandsdrahtwicklung 52 aufgespannt ist. Die Widerstandsdrahtwicklung 52 ist ebenfalls auf der Oberfläche des Ventilgehäuses 10 fest eingeglast, so daß ein direkter Wärmekontakt mit dem Ventilgehause 10 gegeben ist. Die Widerstandsdrahtwicklung besteht beispielsweise aus ca. rund 20 Windungen eines Ni-Drahtes, so daß sich ein Widerstand bei Raumtemperatur von rund 20 Ohm ergibt. Die Windungszahl kann aber auch größer oder kleiner sein und wird allgemein bauformabhängig derart gewählt, daß eine gleichmäßige Erwärmung des Ventilgehäuses sichergestellt ist. Die Verwendung von Nickel für die Widerstandsheizung besitzt den Vorteil, daß Nickel eine starke Abhängigkeit des elektrischen Widerstands von der Temperatur besitzt, so daß auf der Basis des Widerstandswertes der Widerstandsheizung 50 eine cirekte Ventilkalibrierung (siehe unten) erfolgen kann.

Die elektrische Widerstandsheizung auf der außeren Oberfläche des Ventilgehäuses ist kein zwingendes Merkmal der Erfindung. Das Ventilgehäuse 10 kann vielmehr auch durch eine anders aufgebaute Temperierungseinrichtung geheizt oder gekühlt oder anwendungsabhängig so in Wärmekontakt mit einer temperaturveränderlichen Umgebung angeordnet werden, daß eine Betätigung des Ventils in Abhängigkeit von der Umgebungstemperatur erfolgt.

Typische Beispielmaße des in Fig. 1 nicht maßstäblich gezeichneten Ventils sind:
- Anschlußleitungen 41, 42: Innendurchmesser 0,3 mm, Außendurchmesser: 0,5 mm.
- Stützrohre 43,44: Außendurchmesser: 1 mm.
- Stellrohre 31, 21: Außendurchmesser: 2 mm, Länge: 10 mm.
- Ventilgehäuse 10: Außendurchmesser: 3 mm, Innendurchmesser: 2 mm.
- Anpreßkörper 20: axiale Länge (= Durchmesser des kugelförmigen Grundkörpers) 3 mm, radialer Durchmesser: 2 mm.

Ein besonderer Vorteil dieser Dimensionierung besteht darin, daß das Dosierventil 100 extrem leichtgewichtig ist. So beträgt die Ventilmasse nur rund 3 g.

Das erfindungsgemäße Dosierventil 100 wird montiert, indem zunächst der Anpreßkörper 20 in das Innere des Ventilgehäuses 10 eingeführt wird. Das Ventilgehäuse 10 wird hierzu leicht erwärmt, um die Einführung des Anpreßkörpers 20 bis in die Mitte des rohrförmigen Gehäuses zu erleichtern. An die Enden der Anschlußleitungen 41, 42 werden die Stützrohre 43, 44 angelötet, die an ihren Enden entlang der Verbindungslinien 314, 324 durch Laserschweißen mit den Enden der Stellrohre 31, 32 verbunden werden. Anschließend werden die Stellrohre entlang der Verbindungslinien 314, 324 mit dem Ventilgehäuse 10 verschweißt. Hierzu werden die Stellrohre 31, 32 mit den Anschlußleitungen in das Ventilgehäuse 10 eingeführt, bis sie fest an den Kugeloberflächen des Anpreßkörpes 20 anliegen. Zum Verschweißen wird das Ventilgehäuse 10 erwärmt, so daß sich nach dem Verschweißen und Abkühlen eine Vorspannung der Stellrohre 31, 32 gegen den Anpreßkörper 20 einstellt.

Das fertig montierte Dosierventil 100 wird wie folgt betrieben. Im Ausgangszustand drücken die vergoldeten Ventilsitze 311, 321 auf den Anpreßkörper aus Saphir. Das Ventil ist geschlossen. Durch Aufheizen des Ventils mit der Heizeinrichtung 50 dehnt sich das Ventilgehäuse 10 in seiner Länge aus, das aus einem Material mit hoher Wärmeausdehnung hergestellt ist. Die Stellrohre 31, 32 hingegen ändern ihre Länge bei Erwärmung kaum, da sie aus einem Material mit erheblich geringeren Wärmeausdehnung (z.B. 10 x kleiner) hergestellt sind. Im erwärmten Zustand werden somit die Ventilsitze vom Anpreßkörper 20 zurückgezogen, so daß sich feine Ringspalten zwischen den Ventilsitzen 311, 321 und den axialen Kugeloberflächen des Anpreßkörpers 20 bilden und der Weg für das Gas freigegeben wird. Das Gas strömt beispielsweise von der Anschlußleitung 41 (Zuflußrohr) über den ersten Ringspalt an den ebenen Seitenflächen 21 des Anpreßkörpers 20 vorbei und durch den zweiten Ringspalt in die zweite Anschlußleitung 42 (Abflußrohr). Bei Abkühlung des Ventils zieht sich das Ventilgehäuse 10 wieder zusammen, so daß die Ventilsitze wieder auf den Anpreßkörper 20 drücken und die Ringspalte und somit das Dosierventil geschlossen wird.

Durch die Temperatureinstellung wird über die Wärmeausdehnung das Öffnen des Ventils und die Größe der Ringspalte bestimmt. Dadurch kann durch die Temperatureinstellung der durchgelassene Gasstrom in weiten Grenzen gesteuert werden.

Ein besonderer Gesichtspunkt der Erfindung betrifft die Betriebsweise bei der Gasdosierung. Wird für die Heizeinrichtung 50 ein Widerstandsmaterial mit einem derart hohen Temperaturkoeffizient wie dem von Nickel gewählt, kann durch eine Widerstandsmessung an der Heizeinrichtung 50 die Temperatur des Ventils ausreichend genau ermittelt werden. Erfindungsgemäß ist daher vorgesehen, sowohl das Öffnen des Ventils als auch die Menge des durchgelassenen Gasstroms ausschließlich über elektrische Größen der Widerstandsheizung 50 einzustellen. Die Größe der Spaltöffnung kann direkt über den durch Heizstrom und Heizspannung zu ermittelnden Widerstand eingestellt werden. Dies stellt einen wichtigen Vorteil gegenüber den herkömmlichen, elektrisch betätigbaren Dosierventilen dar. Zur quantitativen Dosierung ist zusätzlich eine Kalibrierung des Ventils durch Aufnahme der Abhängigkeit des Gasdurchflusses vom jeweiligen Heizstrom und/oder elektrischen Widerstand vorgesehen.

Anwendungen des erfindungsgemäßen Dosierventils sind schematisch in Fig. 3 illustriert. Generell ist das Dosierventil 100 für alle Zwecke zur Dosierung oder Druckreduzierung zwischen einem Versorgungsreservoir 60 und einem Zielreservoir 70 verwendbar. Die Verbindungen zum bzw. vom Ventil erfolgen über die Zufluß- und Abflußrohre 41, 42. Das Vorratsreservoir 60 ist beispielsweise eine Druckflasche eines Gaschromatographen. Die Verbindung zwischen den Anschlußleitungen und den jeweiligen Reservoir erfolgt vorzugsweise, indem an den Enden der Anschlußleitungen durchbohrte Schrauben mit Dichtflächen angelötet werden, die direkt an entsprechende Anschlüsse der Reservoire angekoppelt werden.

Im oberen Teil von Fig. 3 bezeichnen die Bezugszeichen 53, 54 elektrische Versorgungsleitungen für die Heizeinrichtung 50 (siehe Fig. 1). Aufgrund des geringen Gewichts und der hohen Dichtheit des Dosierventils werden Anwendungen in Weltrauminstrumenten bevorzugt. Mit besonderem Vorteil sind erfindungsgemäße Dosierventile aber auch an tragbaren Gaschromatographen oder mobil einsetzbaren Massenspektrometern anwendbar.

Eine weitere wichtige Anwendung besteht im Aufbau eines Kalibriersystems, insbesondere für Gaschromatographen oder Massenspektrometer, wie es im unteren Teil von Fig. 3 illustriert ist. Das Kalibriersystem besteht aus einem Kalibrierreservoir 80, von dem über das Dosierventil 100 und die Anschlußleitung 45 in definierter Weise die Gasmengen in ein Meß- oder Analysesystem 90 (Probenkammer) des zu kalibrierenden Gerätes überführt werden. Das Kalibrierungsreservoir 80 besteht beispielsweise aus einem Minitank (Volumen rund 20 ml), oder einem anwendungsabhängig größeren Tank (z.B. bis zu 20 1)der mit einem Kalibrierungsgas gefüllt ist. Das Kalibrierungsgas umfaßt beispielsweise Ar-, Ne- und He-Isotope in einem bestimmten Mischungsverhältnis. Zur Systemkalibrierung wird mit dem Dosierventil 100 eine definierte Gasmenge in das System 90 zu dessen Kalibrierung überführt.

Weitere Anwendungen der Erfindung ergeben sich im Bereich der Steuerungs- und Sicherheitstechnik. Für eine Steuerungsaufgabe wird das erfindungsgemäße Dosierventil in einem Gerät, in dem ein Gasfluß je nach betriebsbedingter Temperatur des Gerätes eingestellt werden soll, in Wärmekontakt mit dem Gerät angebracht. Nach den oben angewandten Prinzipien öffnet sich das Dosierventil bei Erhöhung der Gerätetemperatur. Zur Einstellung einer bestimmten Bezugstemperatur zur Ventilöffnung wird das Ventil anwendungsabhängig gestaltet. Die Erfüllung einer Sicherheitsfunktion erfolgt in analoger Weise. Beim Temperaturerhöhung in einer zu überwachenden Umgebung wird ein Gasfluß durch das Dosierventil zugelassen, um gegebenenfalls bestimmte Sicherheitsmechanismen oder dergleichen auszulösen.

Ein wichtiger Vorteil des erfindungsgemäßen Dosierventils besteht darin, daß es sowohl für einen hermetischen Verschluß der Ventilsitze als auch für eine genaue Durchflußeinstellung in einem großen Arbeitsbereich geeignet ist. So können Durchflußraten im Bereich von 2 ^{...}10⁻¹⁰ ml/s bis 10 ml/s eingestellt werden. Es können Druckreduzierungen von einem Eingangsdruck im Bereich von 2 bis 200 bar auf einen Ausgangsdruck zwischen 1 bar und darunter bis in den mbar-Bereich erzielt werden. Die dazu erforderliche elektrische Leistung ist insbesondere bei Betrieb unter Vakuumbedingungen mit 400 mW extrem gering, so daß ohne weiteres auch ein Batteriebetrieb des Dosierventils ermöglicht wird.

## Patentansprüche

1. Dosierventil (100) mit einem heizbaren rohrförmigen Ventilgehäuse (10), einem Anpresskörper (20) und einem ersten Ventilsitz (312), wobei der Anpresskörper (20) im Inneren des Ventilgehäuses (10) angeordnet ist und ein erstes gerades Stellrohr (31) vorgesehen ist, dessen erstes Ende (311) an einem Ende des Ventilgehäuses (10) fluiddicht befestigt und mit einer ersten Anschlussleitung (41) verbunden ist und dessen zweites, zum Anpresskörper (20) gerichtetes Ende den ersten Ventilsitz (312) bildet,
**dadurch gekennzeichnet, dass**
ein zweites gerades Stellrohr (32) vorgesehen ist, dessen erstes Ende (321) entgegengesetzt zum ersten Stellrohr (31) am anderen Ende des Ventilgehäuses (10) fluiddicht befestigt und mit einer zweiten Anschlußleitung (42) verbunden ist und dessen zweites Ende zum Anpresskörper (20) gerichtet ist und einen zweiten Ventilsitz (322) bildet,
der Anpresskörper (20) in der Mitte im Ventilgehäuse (10) ortsfest angebracht ist und das Ventilgehäuse (10) und das Stellrohr (31) aus Materialien mit verschiedenen thermischen Ausdehnungskoeffizienten bestehen, und
die Position der ersten und zweiten Ventilsitze (311, 322) relativ zum Anpresskörper (20) durch Variation der Temperatur des Dosierventils (100) einstellbar ist.

2. Dosierventil gemäß Anspruch 1, bei dem der Anpresskörper (20) aus einem nicht-metallischen Material besteht, das eine größere Härte als der jeweils angrenzende Ventilsitz (311, 321) besitzt.

3. Dosierventil gemäß Anspruch 2, bei dem der Anpresskörper (20) durch einen Formkörper in Gestalt eines Kreiszylinders mit abgerundeten Stirnseiten und mindestens einer abgeflachten Seitenfläche (21) gebildet wird, wobei der Zylinderdurchmesser dem Innendurchmesser des Ventilgehäuses (10) entspricht und die Stirnflächen jeweils zu den Ventilsitzen (312, 322) gerichtet sind.

4. Dosierventil gemäß einem der vorhergehenden Ansprüche, bei dem der Anpresskörper (20) aus Saphir besteht und die Ventilsitze jeweils auf der zum Anpresskörper weisenden Oberfläche eine Goldbeschichtung tragen.

5. Dosierventil gemäß Anspruch 4, bei dem der Anpresskörper (20) im Ventilgehäuse (10) so ausgerichtet ist, daß die Hauptachse des Saphirs mit der Achse des Ventilgehäuses (10) zusammenfällt.

6. Dosierventil gemäß einem der vorhergehenden Ansprüche, bei dem auf der Außenseite des Ventilgehäuses (10) eine Heizeinrichtung (50), bestehend aus an den Enden des Ventilgehäuses (10) angebrachten Kontaktringen (51) und einer sich zwischen . den Kontaktringen (51) auf. der Außenseite des Ventilgehäuses (10) erstreckenden Widerstandsdrahtwicklung (52), vorgesehen ist, wobei die Kontaktringe (51) und die Widerstandsdrahtwicklung (52) in einem einglasierten Zustand auf dem Ventilgehäuse (10) befestigt sind.

7. Dosierventil gemäß Anspruch 6, bei dem die Widerstandsdrahtwicklung (52) aus einem Material besteht, das einen thermischen Widerstandskoeffizienten besitzt, der im wesentlichen so hoch wie der thermische Widerstandskoeffizient von Nickel ist.

8. Verfahren zur Gasdosierung mit einem elektrisch betätigbaren Dosierventil gemäß einem der Ansprüche 1 bis 7, bei dem eine Einstellung des Gasdurchflusses durch das Dosierventil durch eine Temperatureinstellung am Ventilgehäuse mit einer elektrischen Widerstandsheizung erfolgt,
**dadurch gekennzeichnet, dass**
zur Temperatureinstellung die Widerstandsheizung derart mit einem elektrischen Strom durchflossen wird, dass die Widerstandsheizung einen vorbestimmten elektrischen Widerstandswert erreicht.

9. Verfahren gemäß Anspruch 8, bei dem aus dem Widerstandswert der Widerstandsheizung und Kalibrierungswerten der Gasdurchfluss durch das Dosierventil ermittelt wird.

10. Verfahren gemäß einem der Ansprüche 8 oder 9, bei dem das Ventilgehäuse in thermischem Kontakt mit einer temperaturveränderlichen Umgebung angeordnet ist und die Einstellung des Gasdurchflusses durch das Dosierventil in Abhängigkeit von der Umgebungstemperatur erfolgt.

11. Verfahren gemäß einem der Ansprüche 8 bis 10, bei dem die Temperatur des Dosierventils durch eine Widerstandsmessung an der Widerstandsheizung ermittelt wird.

12. Verwendung eines Dosierventils gemäß einem der Ansprüche 1 bis 7 als:
- Dosiereinrichtung für einen Gaschromatrographen oder ein Massenspektrometer,
- Teil eines Kalibriersystems für Meß- oder Analysegeräte,
- Druckreduziereinrichtung, oder
- Steuerungs- oder Sicherheitsventil.

## Claims

1. Dosing valve (100) having a tubular valve housing (10) which can be heated, a pressure body (20) and a first valve seat (312), the pressure body (20) being disposed inside the valve housing (10) and a first straight adjustment tube (31) being provided, the first end (311) of which is secured in a fluid-tight manner to one end of the valve housing (10) and is connected to a first connecting line (41), and the second end of which is directed towards the pressure body (20) and forms the first valve seat (312),
**characterised in that**
a second straight adjustment tube (32) is provided, the first end (321) of which is secured at the other end of the valve housing (10) in a fluid-tight manner and opposed to the first adjustment tube (31), and is connected to a second connecting line (42), and the second end of which is directed towards the pressure body (20) and forms a second valve seat (322),
the pressure body (20) is attached stationary in the middle of the valve housing (10) and the valve housing (10) and the adjustment tube (31) consist of materials which have different thermal coefficients of expansion, and
the position of the first and second valve seats (311, 322) can be adjusted relative to the pressure body (20) by varying the temperature of the dosing valve (100).

2. Dosing valve according to claim 1, in which the pressure body (20) consists of a non-metallic material which has a greater hardness than the respectively adjoining valve seat (311,321).

3. Dosing valve according to claim 2, in which the pressure body (20) is formed by a moulded article in the shape of a cylinder having rounded end faces and at least one flattened side surface (21), the diameter of the cylinder corresponding to the inside diameter of the valve housing (10) and the end faces being in each case directed towards the valve seats (312, 322).

4. Dosing valve according to one of the preceding claims, in which the pressure body (20) consists of sapphire and the valve seats each bear a gold coating on the respective surface pointing towards the pressure body.

5. Dosing valve according to claim 4, in which the pressure body (20) is so aligned in the valve housing (10) that the main axis of the sapphire coincides with the axis of the valve housing (10).

6. Dosing valve according to one of the preceding claims, in which there is provided on the outside of the valve housing (10) a heating device (50) comprising contact rings (51), which are attached to the ends of the valve housing (10), and a resistance wire winding (52) which extends on the outside of the valve housing (10), the contact rings (51) and the resistance wire winding (52) being secured in a glazed-in state to the valve housing (10).

7. Dosing valve according to claim 6, in which the resistance wire winding (52) consists of a material which has a thermal resistance coefficient which is substantially as high as the thermal resistance coefficient of nickel.

8. Method of dosing gas using an electrically actuatable dosing valve according to one of claims 1 to 7, in which the gas flow through the dosing valve is adjusted by temperature regulation on the valve housing using an electric resistance heating device,
**characterised in that**
to adjust the temperature, an electric current is passed through the resistance heating device in such a way that said device reaches a predetermined electric resistance value.

9. Method according to claim 8, in which the gas flow through the dosing valve is determined from the resistance value of the resistance heating device and calibration values.

10. Method according to one of claims 8 or 9, in which the valve housing is arranged in thermal contact with surroundings which can vary in temperature and the gas flow through the dosing valve is adjusted in dependence on the ambient temperature.

11. Method according to one of claims 8 to 10, in which the temperature of the dosing valve is determined by measuring the resistance at the resistance heating device.

12. Use of a dosing valve according to one of claims 1 to 7 as:
- a dosing device for a gas chromatograph or a mass spectrometer,
- a part of a calibration system for measuring or analysing apparatus,
- a pressure reduction device, or
- a control or safety valve.

## Revendications

1. Valve de dosage (100) avec un corps de valve tubulaire chauffant (10), un corps de pression (20) et un premier siège de valve (312), dans laquelle le corps de pression (20) est disposé à l'intérieur du corps de valve (10) et un premier tube de réglage droit (31) est prévu, dont la première extrémité (311) est fixée de façon étanche au fluide sur une extrémité du corps de valve (10) et est reliée à une première conduite de raccordement (41), et dont la deuxième extrémité, orientée vers le corps de pression (20), forme le premier siège de valve (312),
**caractérisée en ce que**
un deuxième tube de réglage droit (32) est prévu, dont la première extrémité (321) est fixée de manière étanche au fluide à l'opposé du premier tube de réglage (31) à l'autre extrémité du corps de valve (10) et est relié à une deuxième conduite de raccordement (42), et dont la deuxième extrémité est orientée vers le corps de pression (20) et forme un deuxième siège de valve (322), **en ce que**
le corps de pression (20) est disposé localement fixé au milieu du corps de valve (10) et **en ce que** le corps de valve (10) et le tube de réglage (31) sont en matériaux de coefficients de dilatation thermique différents, et **en ce que**
la position des premier et deuxième sièges de valve (311, 322) relativement au corps de pression (20) est réglable par variation de la température de la valve de dosage (100).

2. Valve de dosage selon la revendication 1, pour laquelle le corps de pression (20) consiste en un matériau non métallique qui possède une plus grande dureté que le siège de valve contigu respectif (311, 321).

3. Valve de dosage selon la revendication 2, pour laquelle le corps de pression (20) est formé par un corps moulé de la forme d'un cylindre de révolution avec des faces frontales arrondies et au moins une surface latérale aplatie (21), moyennant quoi le diamètre du cylindre correspond au diamètre intérieur du corps de valve (10) et les faces frontales sont orientées respectivement vers les sièges de valve (312, 322).

4. Valve de dosage selon l'une quelconque des revendications précédentes, pour laquelle le corps de pression (20) est en saphir et les sièges de valve portent un placage d'or sur la surface respective dirigée vers le corps de pression.

5. Valve de dosage selon la revendication 4, pour laquelle le corps de pression (20) est positionné dans le corps de valve (10) de telle sorte que l'axe principal du saphir coïncide avec l'axe du corps de valve (10).

6. Valve de dosage selon l'une quelconque des revendications précédentes, pour laquelle, sur la face extérieure du corps de valve (10), un dispositif de chauffage (50) est prévu, qui consiste en des anneaux de contact (51) disposés aux extrémités du corps de valve (10) et en un enroulement de fils de résistance (52) s'étendant entre les anneaux de contact (51) à la face extérieure du corps de valve (10), moyennant quoi les anneaux de contact (51) et l'enroulement de fils de résistance (52) sont fixés sur le corps de valve (10) dans un état scellé dans du verre.

7. Valve de dosage selon la revendication 6, pour laquelle l'enroulement de fils de résistance (52) consiste en un matériau qui possède un coefficient thermique de résistivité qui est essentiellement aussi élevé que le coefficient thermique de résistivité du nickel.

8. Procédé de dosage de gaz avec une valve de dosage pouvant être actionnée électriquement selon l'une quelconque des revendications 1 à 7, pour lequel un réglage du débit de gaz à travers la valve de dosage s'effectue par un réglage de température sur le corps de valve avec un chauffage électrique à résistance,
**caractérisé en ce que**,
pour le réglage de la température, le chauffage à résistance est traversé par un courant électrique de telle sorte que le chauffage à résistance atteint une valeur de résistance électrique prédéterminée.

9. Procédé selon la revendication 8, pour lequel le débit de gaz à travers la valve de dosage est déterminé à partir de la valeur de résistance du chauffage à résistance et de valeurs de calibrage.

10. Procédé selon l'une des revendications 8 ou 9, pour lequel le corps de valve est disposé en contact thermique avec un environnement à température variable, et pour lequel le réglage du débit de gaz à travers la valve de dosage s'effectue en fonction de la température ambiante.

11. Procédé selon l'une quelconque des revendications 8 à 10, pour lequel la température de la valve de dosage est déterminée par une mesure de résistance sur le chauffage à résistance.

12. Utilisation d'une valve de dosage selon l'une quelconque des revendications 1 à 7 en tant que :
- dispositif de dosage pour un chromatographe en phase gazeuse ou un spectromètre de masse,
- partie d'un système de calibrage pour des appareils de mesure ou d'analyse,
- dispositif de réduction de pression ou
- valve de commande ou de sécurité.
